# EUROPEAN PATENT SPECIFICATION

(11) **EP 1 581 382 B1**
(45) Date of publication and mention of the grant of the patent: **16.01.2008**
(21) Application number: 03814997.7
(22) Date of filing: 29.12.2003
(51) Int. Cl.: B29D 30/24, B29D 30/30, B29D 30/32

(54) **ASSEMBLY PROCESS FOR BUILDING A TIRE**
MONTAGEVERFAHREN ZUM AUFBAU EINES REIFENS
PROCEDE D'ASSEMBLAGE POUR LA FABRICATION DES PNEUS

(30) Priority: 30.12.2002 US 437117 P
(43) Date of publication of application: 05.10.2005
(73) Proprietor: Société de Technologie Michelin, 63000 Clermont-Ferrand (FR); Michelin Recherche et Technique S.A., 1763 Granges-Paccot (CH)
(72) Inventor: SATTERFIELD, Larry, Moore, SC 29369 (US); LATIEYRE, Jean-Pierre, Greer, SC 29650 (US); DUPUIS, Daniel, André, Easley, SC 29640 (US); BAILEY, David, William, Homosassa, FL 34446 (US)
(74) Representative: Bauvir, Jacques
(86) International application number: PCT/US2003/041582
(87) International publication number: WO 2004/060644

(56) References cited:
- EP-A1- 0 974 448
- DE-A1- 1 579 212
- DE-A1- 2 511 160
- GB-A- 1 390 399
- US-A- 2 045 545
- US-A- 4 045 277
- US-B1- 6 250 356
- PATENT ABSTRACTS OF JAPAN vol. 013, no. 565 (M-907), 14 December 1989 (1989-12-14) & JP 01 237127 A (BRIDGESTONE CORP), 21 September 1989 (1989-09-21)

## Description

The present invention relates to an assembly process for building a tire according to the preamble of claim 1.

A process of this kind is known from e.g. EP-A- 0 974 448.

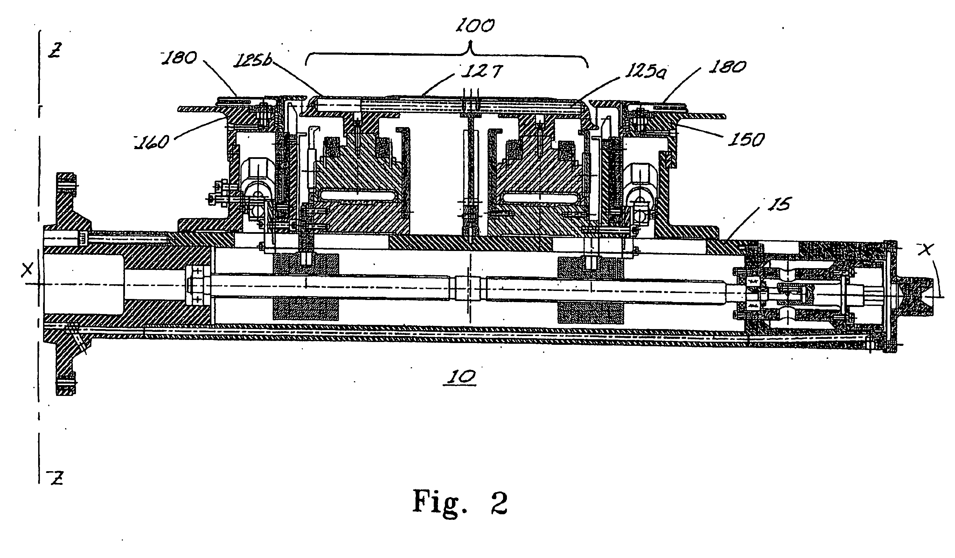

Certain tires may have a bead architecture that is different from conventional pneumatic tires. The bead architecture may be designed in such a way that upon a loss of air pressure to the tire, the beads maintain an improved grip on the rim to better retain the tire on the rim than in conventional pneumatic tires. One design of this type of tire is illustrated in United States Patent Numbers 5,785,781 and 5,971,047 that are owned by the assignee of the present invention and are incorporated by reference herein in their entirety for all purposes. Figure I depicts an example of a tire having this bead architecture. See, for example, Fig. 2 of United States Patent Number 5,971,047 for a detailed view of the bead construction.

The construction of a pneumatic tire often involves a two-stage process. The first stage comprises the building of the beads and carcass of a tire on a drum. The tire is then moved to another drum in which the second stage of the tire building process occurs. Here, belts, an unfinished tire tread, and/or possibly sidewalls are added to the tire. However, it is also known in the art to provide a single drum that allows the combining of these two stages. Such a process is typically known as a unistage building process because the steps occur on a single drum.

Previously known methods of building the bead architecture shown in Fig. I employ at least the steps of first placing an uncured rubber section on the casing carcass followed by folding of the extremity of the carcass around the rubber section. These methods may suffer from variations in the precision and placement of an uncured rubber section in the bead during the manufacturing of tires. In addition, precision in the finished tire is impacted further if the uncured rubber section does not remain substantially stationary, but is allowed to rotate or otherwise distort, during the carcass folding step.
These methods are described in the publication DE 1 579 212 concerning a tyre construction machine with a cylindrical construction drum of variable diameter, in the publication DE 25 11 160 concerning a device for constructing a carcass, in the publication JP 01-237127 concerning a tyre forming apparatus, in the publication GB 1 390 399 concerning an apparatus for assisting in the production of carcasses for pneumatic tyres, in the publication US 6 250 356, concerning a drum and a process for assembling carcasses having two different diameters and wherein the carcass reinforcement is partially turned around an elastomeric rubber compound prior to the positioning of the bead wires, in the publication EP 974 448 considered as the closest prior art, and concerning a drum and a process for assembling carcasses having also two different diameters, in the publication US 2 045 545 concerning a process and an apparatus for making drum built tyres, and in the publication US 4 045 277 concerning a pneumatic tire building drum.

It is the object of the present invention to improve upon previous building methods and drums used in building a tire by providing a tire building assembly process that is capable of producing a tire having consistent tire bead architecture.

This object is achieved according to the invention by the assembly process as defined in claim 1.

Particular embodiments of the invention are the subject of the dependent claims.

The present invention provides an assembly process for building a tire comprising the steps of:
- providing a drum having a substantially cylindrical main receiving surface to receive the products to be assembled, said main receiving surface being radially movable, said drum comprising a right and a left shoulder located axially at the lateral edges of said main receiving surface, and said shoulders being axially extended in the form of a lateral projection; and said apparatus further comprising at least a right and a left side assembly, wherein each of said side assemblies has a nose tab and a substantially cylindrical auxiliary receiving surface;
- positioning radially said main receiving surface at a radial position substantially equal to the radial positions of said auxiliary receiving surfaces and axially positioning said auxiliary receiving surfaces proximate to said main receiving surface to form a substantially continuous receiving surface;
- applying an inner layer complex on said main receiving surface and on said right and left auxiliary receiving surfaces;
- applying a carcass reinforcement on said inner layer complex;
- placing an uncured rubber section on said carcass reinforcement at an axial location radially outward of said nose tab.
This invention is distinct from the closest prior art (as described e.g. in EP-A- 0 974 448) in that it further comprises the steps of:
- folding said inner layer complex and said carcass reinforcement around said uncured rubber section such that the orientation of said uncured rubber section remains substantially stationary;
- translating said side assemblies axially outward at least to a position wherein said fold thus made rest on an axially inward edge of said side assemblies.
- expanding radially said main receiving surface a distance at least equal to the height of said right shoulder;
- placing a bead reinforcement on the fold thus made, axially to the interior of the location where the uncured rubber section is laid;
- placing an bead filler section on said bead reinforcement;
- dilating said uncured rubber section
This specific combination of operations allows a great improvement in the precision and placement of an uncured rubber section in the bead during the manufacturing of tires.

The present invention provides an assembly process for building a tire as discussed previously where the bead filler and bead reinforcement are formed from a unitary bead complex. The steps of placing the bead reinforcement and placing the bead filler section are thereby combined in a single step to simplify assembly of the bead.

The following description sets out to give a non-limiting example of the equipment used, for carrying out the assembly process in accordance with the invention, relying on the figures, in which:
- figure 1 is a cross section view of a tire having a bead architecture exemplary of the type to be fabricated by the apparatus of the invention,
- figure 2 is a detailed view of an embodiment of the invention showing an axial cross-section of the apparatus in the initial set position to receive tire products,
- figure 3 is a detailed view of an embodiment of the invention showing an axial cross-section of the apparatus in the conformation position with the drum segments and the lift tab segments at maximum radial expansion.
- figure 4 is a simplified view of an embodiment of the invention showing a partial axial cross-section of the right-hand side of the apparatus in the conformation position and with the lift tab elements at minimum radial expansion,
- figure 5 is a simplified axial cross-section view of a right-hand drum segment adapted for a tire assembly process using a bead complex,
- figure 6 is a simplified axial cross-section view of a right-hand drum segment adapted for a tire assembly process using separate bead reinforcement and bead filler products,
- figure 7 is a partial axial cross-section views of the right-hand and left hand lift tab segments showing the outward taper,
- figures 8a to 8g are schematic representations in partial axial cross-section of the several steps in the assembly process of a tire according to the invention,
- figures 9a to 9c are schematic representations on partial cross-section of the steps to pose a bead reinforcement wire.

Reference will now be made in detail to exemplary versions of the invention, one or more versions of which are illustrated in the drawings. Each described example is provided as an explanation of the invention, and not meant as a limitation of the invention. Throughout the description, features illustrated or described as part of one version may be usable with another version. Features that are common to all or some versions are described using similar reference numerals as further depicted in the figures.

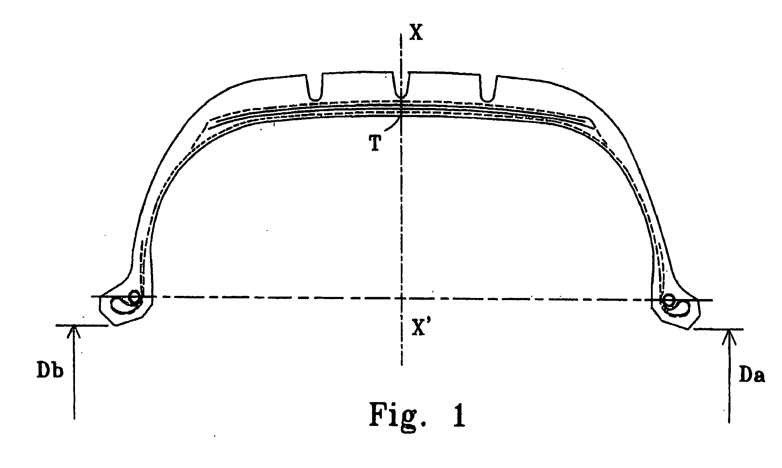

Figure 2 depicts an apparatus 10 for building a tire comprising an apparatus frame 11 and a main shaft 15, a tire building drum 100, at least a right side assembly 150 and a left side assembly 160, The tire building drum 100 is configured for building tires having unequal bead diameters such as the tire shown in Fig. 1. The main shaft 15 of the apparatus is attached to the apparatus frame 11 (not shown) so that the shaft can rotate at least about its longitudinal axis X-X to allow the laying of tire components during the building process. The main shaft 15 can be attached to the frame 11 to also allow rotation about a vertical axis Z-Z passing through the apparatus frame. This second axis of rotational freedom allows the entire apparatus to rotate from at least a first to a second tire building stage. The multiple stages may be configured to complete the carcass-building steps, or a combination of stages to build both the carcass and to build the belt package and tread band. In the detailed description that follows, reference is made to the right and left sides of the apparatus 10. Note that "right" and "left" are only descriptive terms that apply to a particular figure. It is within the scope of the invention to include an apparatus configured as a mirror image of the apparatus shown in the figures.

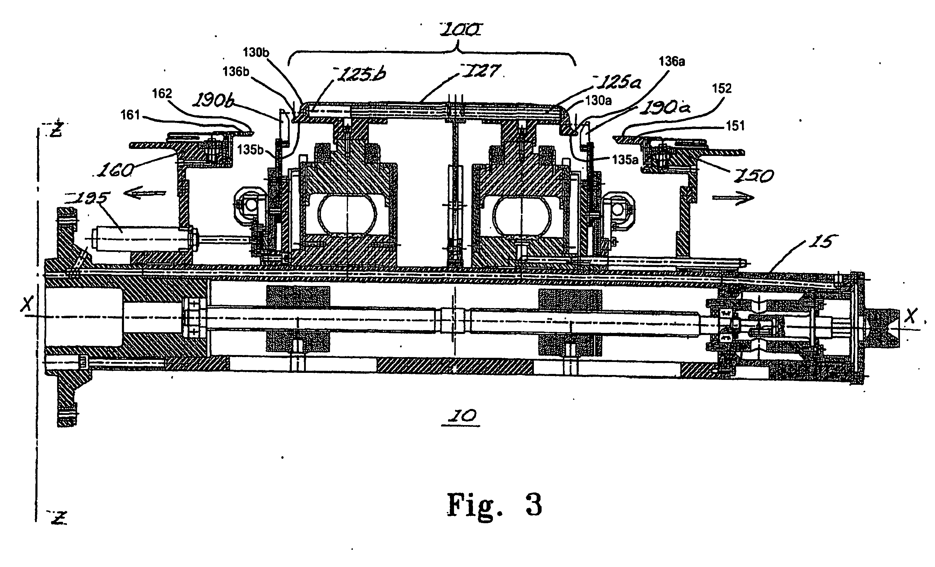

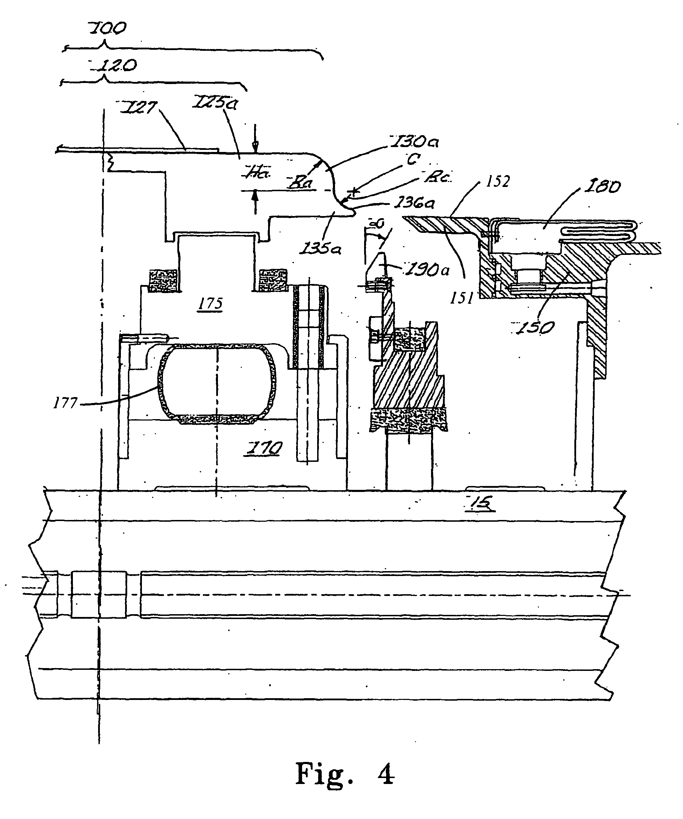

Figure 4 shows a simplified partial axial cross section of the apparatus 10 that permits a better explanation of the invention. Only the right-hand side or "a" side is shown to increase clarity. The building drum 100 includes a plurality of drum segments 120 located radially about the axial centerline of the drum 10. The drum segments 120 are movable in both the axial and radial directions of the apparatus. Each of the drum segments forms a section of an outer surface of the drum 100 that comprises a substantially cylindrical main receiving surface 101 to receive the products to be assembled. As shown in Fig. 4 and Fig. 2, the drum segments 120 may comprise an assembly of right half-segments 125a and left half-segments 125b joined in the center by segmented slats 127. The right and left half-segments are capable of independent axial movement and are fixed in rotation to the main shaft 15. Thus, the drum 100 can be configured to build several different tire sizes by positioning the assembly of drum segments 120 to various axial widths to accommodate tires having different carcass layer lengths. Figure 2 and Fig. 3 show the drum set to an intermediate axial width. Alternatively, the drum segments 120 may each be comprised of a single article with a predetermined, fixed axial width to accommodate tires having a single carcass layer length.

The plurality of drum segments 120 can be expanded to various radial locations to establish a series of nearly cylindrical receiving surfaces 101 to support the tire products. If the number of drum segments is large, the tire products are well supported since the receiving surface 101 is nearly cylindrical and the gaps between the segments are small. When there are few drum segments, the gaps can become large and the receiving surface will have a more polygonal shape. It is desirable to build the tire on a surface that is most nearly cylindrical. Therefore, the required number of drum segments is a compromise between the mechanical complexity of a large number of segments weighed against fewer segments that provide less uniform support to the tire products and provide a less cylindrical receiving surface 101. For the instant invention, twenty-four drum segments provide adequate support of the tire products.

The drum segments 120 further comprise a right-hand lateral shoulder 130a and a left-hand lateral shoulder 130b located at the lateral edges of the main receiving surface 101. The base of each of the shoulders 130a and 130b further extends axially to form a set of lateral projections or nose sections, 135a and 135b, respectively. The exterior surface of each lateral projection forms a set of secondary support surfaces 136a and 136b whose outside diameters are smaller than the diameter of the main receiving surface 101. The secondary support surfaces of the nose sections are defined by a radius Rc of about 6 mm to about 10 mm tangent to the shoulders and whose centers C are noted by a "+" in Fig. 4. The secondary support surfaces help to position the bead products during the final steps of bead formation.

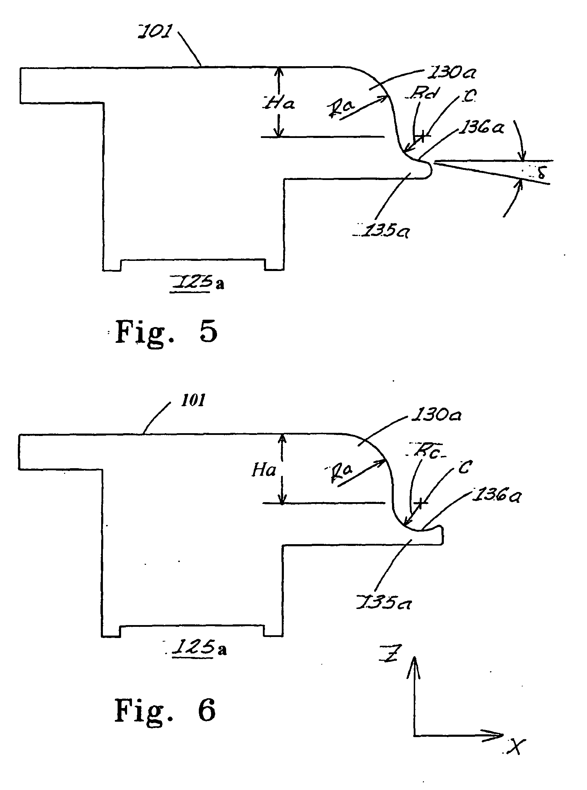

The apparatus 10 is capable of an assembly process employing either a single step separate step to pose the bead reinforcement wire and bead filler as a unitary bead complex, or, alternatively, employing two steps to pose the aforementioned products as separate products. Thus, Fig. 5 shows a cross-section view of a right-hand drum segment 125a adapted to pose a unitary bead complex. The lateral projection 135a is formed by a radius Rc that is of a similar value or slightly greater than the radius of the bead reinforcement wire. In the instant example Rc is about 8 mm. The radius Rc is centered at "C" such that it is tangent to the shoulder 130a and is extended axially outward until it becomes tangent to a downward sloping line inclined at an angle δ of about 16 degrees relative to the horizontal axis XX. Alternatively, when the apparatus 10 employs an assembly process using a separate bead reinforcement wire, it becomes advantageous to provide a positive positioning of the bead reinforcement wire. Figure 6 depicts another version of the right-hand drum segment 125a where the lateral projection 135a is formed by extending the radius Rc beyond a tangent to the horizontal axis XX to form a concave secondary support surface 136a. That is to say, the secondary support surface takes on the appearance of hook that will engage the bead reinforcement wire when the drum segment 125a expands radially.

The drum segments 120 have a shoulder height measured between the outer surface 101 and a horizontal line passing through the centers C of the radius forming the secondary support surfaces. The shoulder height is identified in Fig. 4 as Ha for the right shoulder 130a and Hb for the left shoulder 130b. In addition, the right and left shoulders have respective transition radii Ra and Rb to allow the carcass products to smoothly conform to the outer surfaces of the shoulders. It is advantageous for the transition radii to be proportionate and of a substantially similar magnitude to the shoulder heights. That is, a drum segment with a high shoulder will necessitate a larger expansion of the carcass layer during the conformation step. Expansion of a cord reinforced carcass layer takes place by a plastic deformation of the uncured rubber between the cords. If the expansion is too great, the rubber may undergo non-uniform expansion or even rupture. This deformation is most tortuous in the transition area near the shoulder. In this case, a larger shoulder radius facilitates the expansion of the carcass layer and avoids adverse effects that could affect tire quality.

As shown in Fig. 4, the completed tire would have a larger bead seat diameter on the left side. During the tire design process, the tire designer's choice of bead seat diameter for the right and left bead seats of the finished tire determines the diameter of the bead reinforcement BRW. Typically, tires having the bead architecture shown in Fig. 1 have bead seat diameters Da and Db differing by about 8 mm to about 12 mm. In turn, the diameter of the bead reinforcement BRW determines the radial position of the secondary support surfaces 136a and 136b. Since the main receiving surface 101 remains substantially cylindrical, the shoulders 130a and 130b of drum 100 must now have different heights. The shoulder height Ha is greater than the shoulder height Hb by an amount substantially equal to the difference in bead seat diameters of the finished tire. For the embodiment of the invention shown in Figure 6, the tire would have bead seat diameters are different by about 10 mm. The right shoulder 130a has a height Ha between about 20 mm to about 24 mm, and preferably about 22 mm. Likewise, the left shoulder 130b has a height Hb between about 10 mm to about 14 mm, and preferably about 12 mm.

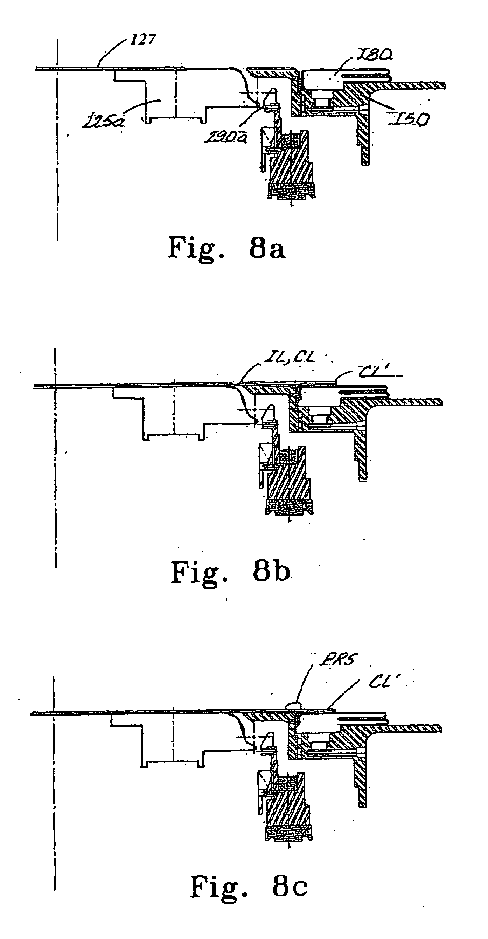

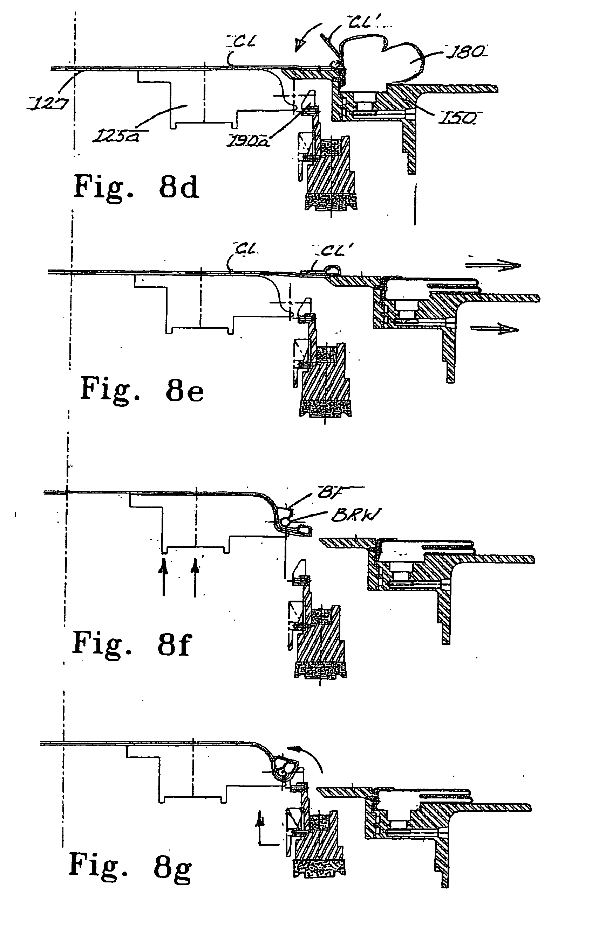

The shoulder height difference presents additional challenges for the design of a tire building apparatus. During the process of building the tire carcass, the drum 100 expands from the initial set diameter a shown in Fig. 8-a to the conformation diameter as shown in Fig. 8-e. The carcass ply is forced to conform to the exterior profile of the drum segments in a step called "ply-down." To facilitate ply-down without adverse affects on the carcass layer fabric, the transition radius Ra on the right (higher) shoulder is larger than the transition radius Rb on the left (lower) shoulder. The drum 100 employs a range for the right hand transition radius Ra and left-hand transition radius Rb between about 6 mm to about 31 mm. Preferably, the drum 100 employs a right-hand transition radius Ra of about 17 mm and a left-hand transition radius Rb of about 12 mm.

The drum 100 includes a means for radially positioning the drum segments during the conformation steps. Suitable examples of such means are mechanical linkages, electrodynamic actuators, hydraulic actuators, or pneumatic assemblies. For the drum 100 shown in Fig. 2, pneumatic assemblies position the segments. These assemblies comprise an inner base 170, a plurality of outer base segments 175 and an expansion bladder 177. The inner annular base 170 is coaxial with and fixed in rotation with the main shaft 15 and is adjustable in axial position relative to the shaft. The plurality of outer base segments 175 is fixed in rotation with the main shaft 15, but may move freely in radial motion relative to the inner base 170. Each of the outer base segments 175 is attached to an adjacent drum segment 120. An expandable pneumatic bladder 177 is interposed between the inner base 170 and the outer base segments 175. When air pressure expands the bladder 177, the outer base segments move radially outward to position the drum segments 120 at the required position. A key, a guide rod, or any suitable means to constrain radial motion may be present and be connected to the inner base 170. The key may communicate with a keyway that is an extension of the outer base segment 175. The key may provide for radial stability during movement of the drum segment 120. The radial positions may be controlled by a variety of means such as fixed or adjustable stop blocks. The present embodiment obtains a guidance of the drum sectors both axially and radially by a guide rod attached to the inner base 170 that slides in a guide tube in the outer base 175.

The second major group of components of apparatus 10 comprises the right and left side assemblies 150 and 160 mounted coaxially with the drum and located proximately to the lateral projections 135a and 135b of the drum segments 120. The axially outermost surfaces of the right and left side assemblies 150 and 160 have extended nose tab 151 and 161 that form substantially cylindrical auxiliary receiving surfaces 152 and 162, respectively, also capable of receiving the tire products to be assembled. The width of said nose tab is comprised between about 30 mm to about 50 mm. The apparatus 10 further comprises a means for axially positioning the side assemblies. Suitable examples of such means are mechanical linkages, electrodynamic actuators, hydraulic actuators, or pneumatic assemblies. The version of the apparatus 10 shown utilizes a plurality of air piston actuators 195 to retract or extend the die assemblies. At the limit of axially inward excursion, both side assemblies 150 and 160 are positioned proximate to the respective shoulders 130a and 130b. In this position, the main receiving surface 101 and the secondary receiving surfaces 152 and 162 form a substantially continuous cylindrical surface to support the full axial width of the tire products, particularly the inner layer complex IL and the carcass layer CL. As shown in Fig 8-a, the support surface is substantially without gaps. The actuators 195 have an outward axial excursion sufficient to retract the side assemblies 150 and 160 outside of both the lateral projections 135a and 135b and the lift tab segments 190a and 190b.

As previously stated, the invention improves the precision of placement of tire products. The side assemblies 150 and 160 further comprise a hold down means to inhibit lateral movement of the inner layer complex IL on the receiving surfaces. An example of such a hold-down means is a series of orifices in communication with a vacuum source that are arranged in the secondary receiving surfaces 152 and 162. When the orifices are in communication with the vacuum, the inner layer complex is drawn into tight contact with secondary receiving surfaces 152 and 162 and further lateral movement is inhibited. Vacuum is the preferred hold-down means; however any suitable hold-down means is applicable such as mechanical fingers, spring pressure plates, or elastic wrappings. However, the later stages of bead formation require the axial retraction of the side assemblies 150 and 160 in preparation for dilation of the profiled rubber section PRS. Experimentation has shown that it is advantageous to provide an anti-stick coating or surface treatment to the secondary receiving surfaces 152 and 162 that combats the natural tendency of the uncured rubber products to adhere to smooth surfaces. Thus, the configuration of the side assemblies 150 and 160 improves the ability to lay precisely the rubber products and to maintain that position while at the same time facilitate the axial animation of the side assemblies.

The right and left side assemblies 150 and 160 each further comprise means for manipulating tire products The version of the apparatus 10 shown utilizes a set of expandable turn-up bladders 180 located proximately and axially outward of the auxiliary receiving surfaces 152 and 162. Control of the expansion of the turn-up bladders 180 aids in the formation of the tire bead. When the turn-up bladders 180 are fully deflated, their radially outer surfaces form substantially cylindrical extensions of the auxiliary receiving surfaces 152 and 162 and provide additional support for the tire products. When the turn-up bladders 180 are fully inflated the outer extremity CL' of the carcass layer will be completely folded aver the profiled rubber section PRS.

The apparatus 10 further comprises a plurality of lift tab segments 190a and 190b arranged concentrically about the horizontal axis XX that facilitate the completion of the bead formation. The lift tab segments are capable of radial expansion by any suitable means as previously described herein or as known to one skilled in the art. In their radially retracted position, the lift tab segments are passive. That is, the lift tab segments are withdrawn a sufficient radial distance to permit the side assemblies to move to their full inward excursion (see Fig. 8-a) in preparation for receiving the inner layer complex IL. As the lift tab elements are extended, they contact the folded extremity of the carcass to achieve a rotation of the profile rubber section PRS. As the lift tab elements further expand, the carcass fold containing the profiled rubber section is brought into contact with the bead filler and bead reinforcement wire. The lift tab elements have a tapered shaped cross section that slopes axially towards the outside of the apparatus. The taper of right-hand lift tab element 190a is defined by an outward opening angle α between the vertical and a line that is tangent to the angled surface of the lift tab segment. Likewise, the taper of left-hand lift tab element 190b is defined by an outward opening angle β between the vertical and a line that is tangent to the angled surface of the lift tab segment.

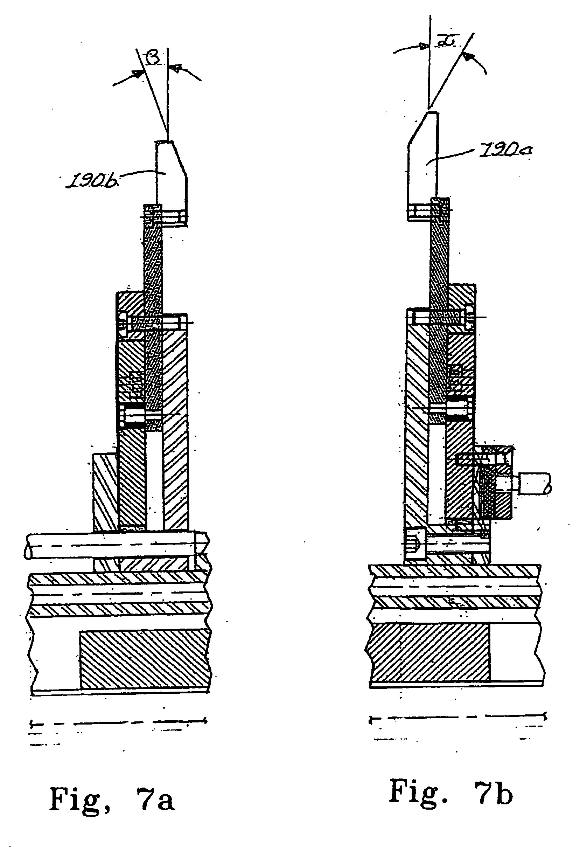

For the embodiment shown in Fig. 4 and Fig 7, the lift tab segment 190a has a straight taper, thus the tangent line is coincident with the surface of the lift tab segment. The shape of the taper can vary. Experimentation has shown that the straight taper provides an effective device for forming the bead. However, it is also within the scope of the invention for the lift tab segment to have a different surface for the taper, such as the concave surface of lift tab segment where the tangent line contacts the lower and upper edges of the lift tab element. Experimentation has also shown that it is advantageous for the taper angle α to increase as the shoulder height increases. Therefore, the right-hand lift tab segments 190a have an angle α between about 20 degrees to about 35 degrees and the left-hand lift tab segments 190b have a lesser angle β between about 10 degrees to about 25 degrees. The optimum values of the angles α and β will be determined from the routine experimentation that is within the ordinary skill required to finely tune any tire assembly apparatus. In the instant embodiment, the angle α is preferably about 30 degrees and the angle β is preferably about 15 degrees.

In a second example, an apparatus 20 (not shown) is intended to manufacture tires having bead seats of equal diameter. In this case, a drum 200 has shoulders 230a and 230b having equal heights and having equal transition radii. That is to say, the height Ha is equal to the height Hb and the radius Ra is equal to the radius Rb. Furthermore, the apparatus 20 would comprise lift tab segments having equal angles α and β.

The assembly process for the manufacture of a tire carcass using an apparatus such as the embodiment of the invention typified by apparatus 10 will now be described in detail. The tire carcass comprises an inner layer complex, a cord reinforced radial carcass layer, a pair of beads for engaging the tire with a mounting rim wherein the beads have different bead seat diameters, and at least one bead reinforcement in each of the beads. More specifically the tire carcass has a bead architecture where the lateral extremity of the carcass layer forms a fold such that the folded extremity passes between the carcass layer and the bead reinforcement. One skilled in the art recognizes that the apparatus 10, the apparatus 20, and the process of manufacture described herein may be adapted to a variety of tire architectures having additional tire products or fewer tire products and is not limited to radial carcass tires. Moreover, the process and apparatus may be practiced either as a two-stage or single-stage process, the latter yielding a completed tire including sidewall products, tread reinforcements, and tread bands.

Figure 8-a through Fig. 8-g are schematic representations in partial axial cross-section of the several steps in the assembly process of a tire according to the first embodiment of the invention where the apparatus 10 is configured to build tires having unequal bead seat diameters. The operation of the process to manufacture a tire according to the second embodiment is easily deduced from the former. The physical articles comprising the apparatus are noted by the same reference numerals as used for the apparatus 10 and as shown in Fig. 4. The tire products required to build the tire carcass are noted by uppercase alphabetic characters. A given tire design may use more or fewer tire products without departure from the scope of the invention. The figures describe the assembly steps for the right-hand portion of the apparatus 10. The steps of the assembly process for the left side are identical and are neither shown nor described herein.

According to Fig. 8-a the drum 100 is set to its first working configuration by positioning radially the main receiving surface 101 at a radial position substantially equal to the radial position of the auxiliary receiving surface 152. The side assembly 150 is positioned at the inward limit of axial extension and proximate to the shoulder 130a. In this configuration, the main and secondary receiving surfaces provide substantially continuous support by a rigid surface for the width of the product to be laid. Figure 8-b shows the apparatus after laying first a sheet of rubber for the inner layer complex. The inner layer complex IL comprises a pre-complexed assembly of an inner layer and a rim protector rubber that is laid as single product for manufacturing efficiency. However, the reference to "inner layer complex" as used herein can apply equally to a single rubber sheet or a complex of a plurality of products. Next, vacuum is supplied to the hold-down orifices to anchor in place the inner layer complex. The carcass layer CL is then posed on top of the inner layer complex IL. The lateral extremities CL' of the carcass layer overlap the extremity of the inner layer complex and protector and are supported by the axially outer surface of the side assembly 150 and the turn-up bladder 180. Uncured rubber products are easily stretched or distorted from their desired shapes. This configuration eliminates gaps in the support surface in the shoulder region of the drum. This improvement facilitates more accurate positioning of the products and reduces unwanted stretching or distortion.

Now, the operator performs the critical step of placement of the profiled rubber section PRS on the carcass layers. The rubber section PRS is generally prepared by extrusion to a predetermined cross section or profile and is posed on the carcass in its uncured state. In Fig. 8-c the rubber sections PRS are posed on carcass layer CL radially outward of the auxiliary receiving surfaces 152, and axially abutting the lateral projections 136a. Here, another advantage of the invention is apparent. The precision of the position of the rubber section PRS fixes the working width of the tire carcass and is critical to the accurate formation of the fold of the carcass layer. As is readily appreciated form Fig. 8-c, the location of the rubber section PRS gains precision in two ways: in the radial direction by the rigid auxiliary receiving surface 152, and in the axial direction by posing on a wide cylindrical surface that permits accurate guiding of the PRS onto the drum.

According to Fig, 8-d, the turnup bladders 180 are now inflated and their exterior surfaces lift the carcass extremity CL' and rotates the extremity CL' about the rubber section PRS to complete the fold of the carcass. Vacuum is maintained during the step of folding the carcass so that the rubber section PRS remains substantially stationary. The bladders 180 are then deflated. At this step it may be advantageous to apply external pressure to roll down the carcass fold and fully adhere the carcass extremity CL' to the carcass layer CL.

Next, in Fig 8-e, the vacuum hold-down is released and the side assembly 150 begins to translate axially outward at least to a retracted position where the fold thus made rests on the axially inward edge of the side assembly 150 so as to provide radial clearance for the drum 100 to begin to expand. In Fig. 8-f, the side assembly 150 has retracted and the drum segments 120 have expanded to their maximum radial position. In this conformation position, the drum 100 has expanded a radial distance at least equal to the height Ha of the right-hand shoulder. As the drum expands radially the extremity of the carcass CL, being folded around the rubber section PRS, resists radial expansion. This constraint facilitates the shaping or conformation of the carcass layer CL to the external contour of the shoulder 130a. Figure 8-f also demonstrates how the rubber section PRS is drawn axially inward as the carcass layer conforms to the shoulder 130a of the drum.

The sequence of assembly steps depends on whether the bead reinforcement wire BRW and bead filler BF are posed as a unitary, complexed product, or as separate products. First, when the assembly process uses a single step to pose a complexed bead product, the apparatus 10 will utilize a drum segment 125a or 125b having the sloping lateral projection shown in Fig. 5. After the conformation step, the bead complex translates inward by means of an external carrier (not shown) that also insures that the bead complex is concentric with the drum 100. The bead complex translates axially until it contacts the folded extremity of the carcass layer CL' that now rest against the shoulder 130a of the drum. In its final position, as shown in Fig. 8-f, the bead complex establishes contact with the carcass layer over a substantial surface area thereby ensuring good green adhesion of the products.

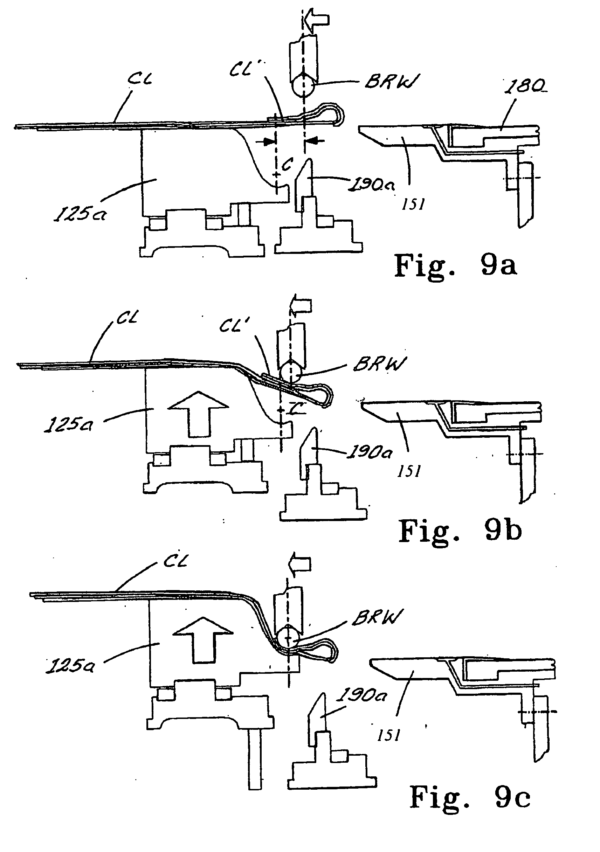

Second, when the assembly process uses separate steps to pose the bead reinforcement wire BRW and the bead filler BF, the apparatus 10 will use the hooked nose drum segment shown in Fig. 6. Prior to the completion of the conformation step, the bead reinforcement wire BRW translates inward by means of an external carrier that also insures that the bead reinforcement wire is concentric with the drum 100. The external carrier, see Fig. 9-a, axially positions the bead reinforcement wire at a position coincident with the center C of the concave radius Rc, corresponding the desired final position of the bead reinforcement wire in the completed bead. The sequencing of the axial approach of the bead reinforcement with the expansion of the drum is important to insure that the bead reinforcement wire passes axially to the interior of the rubber section PRS before substantial radial dilation of the rubber section PRS takes place. If this sequencing is incorrect, the rubber section PRS may interfere with the axial passage of the bead reinforcement wire. As the drum segments 125a reach full radial expansion, the concave surface of the auxiliary receiving surface 136a provides a positive and precise axial retention of the bead reinforcement wire BRW. Next, the bead filler BF is posed on the bead reinforcement wire and in contact with the drum shoulder 130a.

Figures 9-a through 9-c depict a preferred method for posing the bead reinforcement wire BRW. In this method, the external carrier has an axial movement simultaneously with the radial expansion of the drum segments 120. The two movements are timed or synchronized so that the bead reinforcement wire BRW contacts only the folded carcass extremity CL' and such contact is made with a minimum of relative motion between the two products, particularly avoiding sliding contact between the two products. In Figure 9-a, the external carrier has moved axially inward to a position axially to the inside of the rubber section PRS. Next, as shown in Fig. 9-b, the drum segments 120 begin to expand radially as the external carrier continues to move axially inward. As further shown in Fig 9-b, the reinforcement wire BRW has made contact with the folded carcass extremity CL' at a point just inward form the rubber section PRS. The simultaneous axial movement of the external carrier and radial movement of the drum segments continue until the final position of the reinforcement wire BRW is attained, as shown in Fig. 9-c. As can be seen in Fig. 9-c the dotted line representing the center of the bead reinforcement BRW is now coincident with the center C of the concave radius of the drum segment 125a. In this position, the folded extremity of the carcass is positioned in the hook of the drum segment 125a and is essentially clamped in place by the reinforcement wire BRW. The simultaneous movement of the external carrier and the expansion of the drum segments can be realized by mechanical or electronic means known to those skilled in the art.

Figure 8-f and Fig. 8-g show the step to dilate the rubber section PRS and to complete the formation of the bead. The lift tab segments 190a expand radially until the tapered section contacts the tire products. As the segments continue their radial movement, the folded carcass extremity CL' containing the rubber section PRS is radially dilated and rotated. At full radial extension, the lift tab segments fulfill two roles: first, to apply a substantial pressure to the tire product to ensure the bead products are well adhered; and second, to provide a rigid surface that substantially surrounds and shapes the bead products. The shaping effect is easily appreciated in the configuration shown in Fig. 8-g.

To complete the carcass building cycle, the drum segments 120 and the lift tab segments 190a fully retract, thereby placing the drum 100 in the set position to start a new cycle. In this position, the completed carcass is easily removed from the drum.

It should be understood that the present invention includes various modifications that can be made to the embodiments of the tire apparatus described herein as come within the scope of the appended claims.

## Claims

1. An assembly process for building a tire comprising the steps of
- providing a drum (100) having a substantially cylindrical main receiving surface (101) to receive the products to be assembled, said main receiving surface (101) being radially movable, said drum (100) comprising a right (130a) and a left (130b) shoulder located axially at the lateral edges of said main receiving surface (101), and said shoulders (130a, 130b) being axially extended in the form of a lateral projection (135a, 135b); and said drum (100) further comprising at least a right (150) and a left (160) side assembly, wherein each of said side assemblies (150, 160) has a nose tab (151, 161) and a substantially cylindrical auxiliary receiving surface (152, 162),
- positioning radially said main receiving surface (101) at a radial position substantially equal to the radial positions of said auxiliary receiving surfaces (152, 162) and axially positioning said auxiliary receiving surfaces (152, 162) proximate to said main receiving surface (101) to form a substantially continuous receiving surface;
- placing an inner layer complex (IL) on said main receiving surface (101) and on said right (152) and left (162) auxiliary receiving surfaces;
- placing a carcass reinforcement (CL) on said inner layer complex (IL);
- placing an uncured rubber section (PRS) on said carcass reinforcement (CL) at an axial location radially outward of said nose tab (151, 161);
**characterized in that** it further comprises the steps of
- folding said inner layer complex (IL) and said carcass reinforcement (CL) around said uncured rubber section (PRS) such that the orientation of said uncured rubber section remains substantially stationary;
- translating said side assemblies (150, 160) axially outward at least to a position wherein said fold thus made rests on an axially inward edge of said side assemblies (150, 160);
- expanding radially said main receiving surface (101) a distance at least equal to the height of said right shoulder (130a);
- placing a bead reinforcement (BRW) on the fold thus made, axially to the interior of the location where the uncured rubber (PRS) section is laid;
- placing a bead filler section (BF) on said bead reinforcement (BRW);
- dilating said uncured rubber section.

2. The assembly process for building a tire according to claim 1, wherein the right and the left shoulder (130a, 130b) have a vertical height and a transition radius (Ra, Rb) joining said main receiving surface (101) to the outer surface of said shoulders and a radially innermost portion of said shoulders extended laterally to form a right and a left lateral projection (135a, 135b), wherein the outer surface of said projection forms at least a sector of a secondary support surface (136a, 136b) for receiving the tire products to be assembled, and wherein said main receiving surface (101) having an outside diameter greater than the outside diameter of said secondary support surface (136a).

3. The assembly process for building a tire according to claim 2, wherein an axially outermost extent of said secondary support surface (136a) has a downward slope (δ) with respect to the horizontal axis (XX) of the drum (100).

4. The assembly process for building a tire according to claim 3, wherein said secondary support surface (136a) has a concave radius Rc with respect to the horizontal axis (XX) of the drum (100) and wherein the said concave radius Rc is between about 6 mm to about 10 mm.

5. The assembly process for building a tire according to claim 3, wherein the height of said right shoulder (130a) is greater than the height of said left (130b) shoulder, and wherein said right shoulder (130a) height is between about 20 mm to about 24 mm and said left shoulder (130b) height is between about 10 mm to about 14 mm.

6. The assembly process for building a tire according to any one of the claim 1 to 5, wherein the step of placing said carcass reinforcement (CL) is preceded by a step actuating a hold-down means to the products thus laid.

7. The assembly process for building a tire according to claim 6, wherein the step of translating said side assemblies (150, 160) outward is preceded by a step releasing said hold-down means to the products thus laid.

8. The assembly process for building a tire according to any one of the claim 1 to 7, wherein the step of folding said inner layer complex (IL) and said carcass reinforcement (CL) around said uncured rubber section (PRS) is performed by turn-up bladders (180) located proximate with and axially outward of the auxiliary receiving surfaces (152, 162).

9. The assembly process for building a tire according to any one of the claim 1 to 8, wherein the steps of placing said bead reinforcement (BRW) and said bead filler section (BS) are combined in a single step of placing a bead complex.

10. The assembly process for building a tire according to anyone of the claim 1 to 9, wherein the step of expanding radially said main receiving surface (101) and the step of placing said bead reinforcement wire (BRW) further comprises the sub-steps of:
- advancing axially said bead reinforcement wire (BRW) axially to the interior of said rubber section (PRS) before substantial radial dilation of said rubber section takes place,
- expanding radially said main receiving surface (101) and simultaneously advancing axially said bead reinforcement wire (BRW) to establish contact between said bead reinforcement wire and said fold of said carcass extremity,
- continuing the simultaneous radial expansion and axial advance until said bead reinforcement wire brings (BRW) said fold of said carcass extremity in contact with said projection (135a, 135b) of said shoulder (130a, 130b).

11. The assembly process for building a tire according to any one of the claim 1 to 10, wherein the drum further comprises a plurality of lift tab segments (190a, 190b) positioned proximately to said right and left lateral projections (135a, 135b) and a means for radially positioning said lift tab segments at a plurality of specified radial positions, and wherein the step of dilating said rubber section further comprises the step of expanding radially said lift tab segments (190a, 190b) whereby said rubber section radially expands and said fold of said carcass layer forms an adhesive contact with said bead reinforcement (BRW) and said bead filler (BF).

12. The assembly process for building a tire according to claim 11, wherein a tangent to the axially inner surface of said lift tab segment is inclined at an outward opening angle (α, β) relative to the vertical centerline of the drum and wherein said tangent to a right hand plurality of lift tab segments is inclined at an ouward opening angle (α) between about 20° to about 35°, and said tangent to a left-hand plurality of lift tab segments is inclined at an outward opening angle (β) between about 10° to about 25°.

## Patentansprüche

1. Montageverfahren zum Aufbauen eines Reifens, die folgenden Schritte aufweisend:
- Bereitstellen einer Trommel (100) mit einer im Wesentlichen zylindrischen Hauptaufnahmefläche (101), um die zu montierenden Produkte aufzunehmen, wobei die Hauptaufnahmefläche (101) radial beweglich ist, wobei die Trommel (100) eine rechte (130a) und eine linke (130b) Schulter aufweist, die axial an den seitlichen Rändern der Hauptaufnahmefläche (101) angeordnet sind, und wobei sich die Schultern (130a, 130b) axial in Form eines seitlichen Vorsprungs (135a, 135b) erstrecken; und wobei die Trommel (100) ferner mindestens eine rechte (150) und eine linke (160) Seitenbaugruppe aufweist, wobei jede der Seitenbaugruppen (150, 160) einen Steg (151, 161) und eine im Wesentlichen zylindrische Zusatzaufnahmefläche (152, 162) aufweist;
- Radiales Positionieren der Hauptaufnahmefläche (101) an einer radialen Position, die im Wesentlichen den radialen Positionen der Zusatzaufnahmeflächen (152, 162)) entspricht, und axiales Positionieren der Zusatzaufnahmeflächen (152, 162) in der Nähe der Hauptaufnahmefläche (101), um eine im Wesentlichen durchgehende Aufnahmefläche zu bilden;
- Anordnen eines Innenschichtverbunds (IS) auf der Hauptaufnahmefläche (101) und auf den rechten (152) und linken (162) Zusatzaufnahmeflächen;
- Anordnen einer Karkassenverstärkung (KS) auf dem Innenschichtverbund (IS);
- Anordnen eines unausgehärteten Gummiteilstücks (PGT) auf der Karkassenverstärkung (KS) an einer axialen Stelle radial äußerlich von dem Steg (151, 161);
**dadurch gekennzeichnet, dass** es ferner die folgenden Schritte aufweist:
- Umfalten des Innenschichtverbunds (IS) und der Karkassenverstärkung (KS) um das unausgehärtete Gummiteilstück (PGT), derart, dass die Ausrichtung des unausgehärteten Gummiteilstücks im Wesentlichen ortsfest bleibt;
- Versetzen der Seitenbaugruppen (150, 160) axial nach außen auf mindestens eine Position, in welcher der so hergestellte Falz auf einem axial nach innen gerichteten Rand der Seitenbaugruppe (150, 160) aufliegt;
- Radiales Aufweiten der Hauptaufnahmefläche (101) um einen Hub, die mindestens der Höhe der rechten Schulter (130a) entspricht;
- Anordnen einer Wulstverstärkung (WVD) auf den so hergestellten Falz, axial zu der Innenseite der Stelle, wo das unausgehärtete Gummiteilstück (PGT) abgelegt ist;
- Anordnen eines Wulstfüllerteilstücks (WF) auf die Wulstverstärkung (WVD);
- Ausdehnen des unausgehärteten Gummiteilstücks.

2. Montageverfahren zum Aufbauen eines Reifens nach Anspruch 1, wobei die rechte und die linke Schulter (130a, 130b) eine vertikale Höhe und einen Übergangsradius (Ra, Rb) aufweisen, die die Hauptaufnahmefläche (101) mit der äußeren Fläche der Schultern und einem radial am weitesten innen liegenden Abschnitt der Schultern, der sich seitlich erstreckt, verbindet, um einen rechten und einen linken Vorsprung (135a, 135b) zu bilden, wobei die äußere Fläche der Vorsprünge mindestens einen Bereich einer Nebenabstützfläche (136a, 136b) zum Aufnehmen der zu montierenden Reifenprodukte bildet, und wobei die Hauptaufnahmefläche (101) einen Außendurchmesser aufweist, der größer ist als der Außendurchmesser der Nebenabstützfläche (136a).

3. Montageverfahren zum Aufbauen eines Reifens nach Anspruch 2, wobei eine axial am weitesten außen liegende Ausdehnung der Nebenabstützfläche (136a) eine Abwärtsneigung (δ) in Bezug auf die horizontale Achse (XX) der Trommel (100) aufweist.

4. Montageverfahren zum Aufbauen eines Reifens nach Anspruch 3, wobei die Nebenabstützfläche (136a) einen konkaven Radius Rm in Bezug auf die horizontale Achse (XX) der Trommel (100) aufweist, und wobei der konkave Radius Rm zwischen ungefähr 6 mm bis ungefähr 10 mm beträgt.

5. Montageverfahren zum Aufbauen eines Reifens nach Anspruch 3, wobei die Höhe der rechten Schulter (130a) größer ist als die Höhe der linken Schulter (130b), und wobei die Höhe der rechten Schulter (130a) zwischen ungefähr 20 mm bis ungefähr 24 mm beträgt und die Höhe der linken Schulter (130b) zwischen ungefähr 10 mm bis ungefähr 14 mm beträgt.

6. Montageverfahren zum Aufbauen eines Reifens nach einem der Ansprüche 1 bis 5, wobei dem Schritt des Anordnens der Karkassenverstärkung (KS) ein Schritt des Betätigens eines Niederhaltemittels für die so abgelegten Produkte vorausgeht.

7. Montageverfahren zum Aufbauen eines Reifens nach Anspruch 6, wobei dem Schritt des Versetzens der Seitenbaugruppen (150, 160) nach außen ein Schritt des Freigebens des Niederhaltemittels für die so abgelegten Produkte vorausgeht.

8. Montageverfahren zum Aufbauen eines Reifens nach einem der Ansprüche 1 bis 7, wobei der Schritt des Umfaltens des Innenschichtverbunds (IS) und der Karkassenverstärkung (KS) um das unausgehärtete Gummiteilstück (PGT) durch Umschlagblasen (180) ausgeführt wird, die in der Nähe von und axial äußerlich von den Zusatzaufnahmeflächen (152, 162) angeordnet sind.

9. Montageverfahren zum Aufbauen eines Reifens nach einem der Ansprüche 1 bis 8, wobei die Stufen des Anordnens der Wulstverstärkung (WVD) und des Wulstfüllerteilstücks (WF) in einem einzelnen Schritt des Anordnens eines Wulstverbunds kombiniert sind.

10. Montageverfahren zum Aufbauen eines Reifens nach einem der Ansprüche 1 bis 9, wobei der Schritt des radialen Aufweitens der Hauptaufnahmefläche (101) und der Schritt des Anordnens des Wulstverstärkungsdrahts (WVD) ferner die folgenden Unterschritte aufweist:
- Axiales Befördern des Wulstverstärkungsdrahts (WVD) axial zu der Innenseite des Gummiteilstücks (PGT), bevor eine wesentliche radiale Ausdehnung des Gummiteilstücks stattfindet,
- radiales Aufweiten der Hauptaufnahmefläche (101) und gleichzeitiges axiales Befördern des Wulstverstärkungsdrahts, um Berührung zwischen dem Wulstverstärkungsdraht und dem Falz des äußersten Karkassenrands herzustellen,
- Fortsetzen der gleichzeitigen radialen Aufweitung und axialen Beförderung bis der Wulstverstärkungsdraht (WVD) den Falz des äußersten Karkassenrands in Berührung mit dem Vorsprung (135a, 135b) der Schulter (130a, 130b) bringt.

11. Montageverfahren zum Aufbauen eines Reifens nach einem der Ansprüche 1 bis 10, wobei die Trommel ferner mehrere Hubstegsegmente (190a, 190b), die in der Nähe der rechten und linken seitlichen Vorsprünge (135a, 135b) angeordnet sind, und ein Mittel zum radialen Positionieren der Hubstegsegmente an mehreren bestimmten radialen Positionen aufweist, und wobei der Schritt des Ausdehnens des Gummiteilstücks ferner den Schritt des radialen Aufweitens der Hubstegsegmente (190a, 190b) aufweist, wobei sich das Gummiteilstück radial aufweitet und der Falz der Karkassenschicht eine klebende Berührung mit der Wulstverstärkung (WVD) und dem Wulstfüller (WF) bildet.

12. Montageverfahren zum Aufbauen eines Reifens nach Anspruch 11, wobei eine Tangente an die axiale, innere Fläche des Hubstegsegments unter einem sich nach außen öffnenden Winkel (α, β) relativ zu der vertikalen Mittellinie der Trommel geneigt ist, und wobei die Tangente an mehrere rechte Hubstegsegmente unter einem sich nach außen öffnenden Winkel (α) von zwischen ungefähr 20° bis ungefähr 35° geneigt ist, und die Tangente an mehrere linke Hubstegsegmente unter einem sich nach außen öffnenden Winkel (β) von zwischen ungefähr 10° bis ungefähr 25° geneigt ist.

## Revendications

1. Procédé d'assemblage pour la fabrication de pneus comprenant les étapes suivantes :
- procuration d'un tambour (100) ayant une surface de réception principale (101) sensiblement cylindrique pour recevoir les produits à assembler, ladite surface de réception principale (101) étant mobile radialement, ledit tambour (100) comprenant des épaulements droit (130a) et gauche (130b) situés axialement sur les bords latéraux de ladite surface de réception principale (101), lesdits épaulements (130a, 130b) s'étendant axialement sous la forme d'une saillie latérale (135a, 135b); et ledit tambour (100) comprenant en outre au moins des ensembles latéraux droit (150) et gauche (160), chacun desdits ensembles latéraux (150, 160) ayant une patte de nez (151, 161) et une surface de réception auxiliaire (152, 162) sensiblement cylindrique;
- positionnement radial de ladite surface de réception principale (101) sur une position radiale sensiblement égale aux positions radiales desdites surfaces de réception auxiliaires (152, 162) et positionnement radial desdites surfaces de réception auxiliaires (152, 162) à proximité de ladite surface de réception principale (101) pour former une surface de réception sensiblement continue;
- application d'un complexe de couches (IL) intérieur sur ladite surface de réception principale (101) et sur lesdites surfaces de réception auxiliaires droite (152) et gauche (162);
- application d'un renfort de carcasse (CL) sur ledit complexe de couches (IL) intérieur ;
- positionnement d'une section en caoutchouc cru (PRS) sur ledit renfort de carcasse (CL) à un emplacement axial radialement à l'extérieur de ladite patte de nez (151, 161);
**caractérisé en ce qu'**il comprend en outre les étapes suivantes :
- pliage dudit complexe de couches intérieur (IL) et dudit renfort de carcasse (CL) autour de ladite section en caoutchouc cru (PRS) de sorte que l'orientation de ladite section en caoutchouc cru reste sensiblement stationnaire;
- translation axiale desdits ensembles latéraux (150, 160) vers l'extérieur au moins sur une position où ledit pli ainsi réalisé repose sur un bord situé axialement à l'intérieur desdits ensembles latéraux (150, 160);
- extension radiale de ladite surface de réception principale (101) sur une distance au moins égale à la hauteur dudit épaulement droit (130a);
- positionnement d'un renfort de bourrelet (BRW) sur le pli ainsi réalisé, axialement à l'intérieur de l'emplacement où la section en caoutchouc cru (PRS) est posée;
- positionnement d'une section de charge de bourrelet (BF) sur ledit renfort de bourrelet (BRW); et
- dilatation de ladite section en caoutchouc cru.

2. Procédé d'assemblage pour la fabrication de pneus selon la revendication 1, dans lequel les épaulements droit et gauche (130a, 130b) ont une hauteur verticale et un rayon de transition (Ra, Rb) reliant ladite surface de réception principale (101) à la surface extérieure desdits épaulements et une partie radialement intérieure desdits épaulements étendue latéralement pour former des saillies latérales droite et gauche (135a, 135b), dans lequel la surface extérieure de ladite saillie forme au moins un secteur d'une surface de support secondaire (136a, 136b) pour recevoir les produits de pneu à assembler, et dans lequel ladite surface de réception principale (101) a un diamètre extérieur supérieur au diamètre extérieur de ladite surface de support secondaire (136a).

3. Procédé d'assemblage pour la fabrication de pneus selon la revendication 2, dans lequel une étendue axialement extérieure de ladite surface de support secondaire (136a) a une pente descendante (δ) par rapport à l'axe horizontal (X-X) du tambour (100).

4. Procédé d'assemblage pour la fabrication de pneus selon la revendication 3, dans lequel ladite surface de support secondaire (136a) a un rayon concave Rc par rapport à l'axe horizontal (X-X) du tambour (100) et dans lequel ledit rayon concave Rc est d'environ 6 mm à environ 10 mm.

5. Procédé d'assemblage pour la fabrication de pneus selon la revendication 3, dans lequel la hauteur dudit épaulement droit (130a) est supérieure à la hauteur dudit épaulement gauche (130b), et dans lequel la hauteur dudit épaulement droit (130a) est d'environ 20 mm à environ 24 mm et la hauteur dudit épaulement gauche (130b) est d'environ 10 mm à environ 14 mm.

6. Procédé d'assemblage pour la fabrication de pneus selon l'une quelconque des revendications 1 à 5, dans lequel l'étape de positionnement dudit renfort de carcasse (CL) est précédée par une étape d'application d'un moyen de maintien aux produits ainsi posés.

7. Procédé d'assemblage pour la fabrication de pneus selon la revendication 6, dans lequel l'étape de déplacement desdits ensembles latéraux (150, 160) est précédée par une étape de suppression dudit moyen de maintien appliqué aux produits ainsi posés.

8. Procédé d'assemblage pour la fabrication de pneus selon l'une quelconque des revendications 1 à 7, dans lequel l'étape de pliage dudit complexe de couche intérieure (IL) et dudit renfort de carcasse (CL) autour de ladite section en caoutchouc cru (PRS) est réalisée par des vessies de retournement (180) situées à proximité et axialement à l'extérieur des surfaces de réception auxiliaires (152, 162).

9. Procédé d'assemblage pour la fabrication de pneus selon l'une quelconque des revendications 1 à 8, dans lequel les étapes de positionnement dudit renfort de bourrelet (BRW) et de ladite section de charge de bourrelet (BS) sont combinées dans une étape unique de positionnement d'un complexe de bourrelet.

10. Procédé d'assemblage pour la fabrication de pneus selon l'une quelconque des revendications 1 à 9, dans lequel l'étape d'extension de ladite surface de réception principale (101) et l'étape de positionnement dudit fil de renfort de bourrelet (BRW) comprend en outre les sous-étapes suivantes :
- avance axiale dudit fil de renfort de bourrelet (BRW) vers l'intérieur de ladite section en caoutchouc (PRS) avant qu'une dilatation radiale notable de ladite section en caoutchouc se produise,
- extension radiale de ladite surface de réception principale (101) et simultanément avance axiale dudit fil de renfort de bourrelet (BRW) pour établir un contact entre ledit fil de renfort de bourrelet et ledit pli de ladite extrémité de carcasse, et
- poursuite de l'extension radiale et de l'avance axiale simultanée jusqu'à ce que ledit fil de renfort de bourrelet (BRW) mette ledit pli de ladite extrémité de carcasse en contact avec ladite saillie (135a, 135b) dudit épaulement (130a, 130b).

11. Procédé d'assemblage pour la fabrication de pneus selon l'une quelconque des revendications 1 à 10, dans lequel le tambour comprend en outre une pluralité de segments de patte de levage (190a, 190b) positionnés à proximité desdites saillies latérales droite et gauche (135a, 135b) et un moyen pour positionner radialement lesdits segments de patte de levage sur une pluralité de positions radiales spécifiées, et dans lequel l'étape de dilatation de ladite section en caoutchouc comprend en outre l'étape d'extension radiale desdits segments de patte de levage (190a, 190b) de sorte que ladite section en caoutchouc s'étend radialement et ledit pli de ladite couche de carcasse forme un contact adhésif avec ledit renfort de bourrelet (BRW) et ladite charge de bourrelet (BF).

12. Procédé d'assemblage pour la fabrication de pneus selon la revendication 11, dans lequel une tangente à la surface axialement intérieure dudit segment de patte de levage est inclinée selon un d'angle d'ouverture vers l'extérieur (α, β) par rapport à l'axe vertical du tambour et dans lequel ladite tangente par rapport à une pluralité de segments de patte de levage droits est inclinée selon un angle d'ouverture vers l'extérieur (α) d'environ 20 degrés à environ 35 degrés, et ladite tangente par rapport à une pluralité de segments de patte de levage gauches est inclinée selon un angle d'ouverture vers l'extérieur (β) d'environ 10 degrés à environ 25 degrés.
